# EUROPÄISCHE PATENTANMELDUNG

(11) **EP 4 239 231 A1**
(43) Veröffentlichungstag der Anmeldung: **06.09.2023**
(21) Anmeldenummer: 23158807.0
(22) Anmeldetag: 27.02.2023
(51) Int. Cl.: F16K 1/20

(54) **DROSSELKLAPPENANORDNUNG**

(30) Priorität: 02.03.2022 DE 102022202128
(71) Anmelder: Bing Power Systems GmbH, 90427 Nürnberg (DE)
(72) Erfinder: SCHUMMER, Alwin, 90537 Feucht (DE); ZANGL, Martin, 91315 Höchstadt (DE)
(74) Vertreter: FDST Patentanwälte

(57) **Zusammenfassung**

Eine erfindungsgemäße Drosselkappenanordnung (1), die insbesondere zur Verwendung mit einer Brennstoffzelle vorgesehen ist, weist einen Gehäusekörper (2) und einen Hauptkanal (4) auf, der zur Leitung eines Fluidstroms eines Energieträgerfluids den Gehäusekörper (2) durchläuft. Des Weiteren weist die Drosselklappenanordnung (1) eine in dem Hauptkanal (4) verstellbar angeordnete Drosselklappe (6) zur Steuerung oder Regelung des Fluidstroms im Hauptkanal (4), eine Klappenwelle (8), mit der die Drosselklappe (6) drehfest verbunden ist und die zumindest im bestimmungsgemäßen Einsatzzustand zur Verstellung der Drosselklappe (6) mit einem Antrieb (10) gekoppelt ist, und einen Dichtungskörper (22) auf, mittels dessen die Drosselklappe (6) den Hauptkanal (4) in einer Schließstellung dichtend gegen den Durchtritt des Energieträgerfluids verschließt.

## Beschreibung

Die Erfindung betrifft eine Drosselklappenanordnung, insbesondere für eine Brennstoffzelle.

Bei Verbrennungsmotoren wird die dem Verbrennungsmotor zugeführte Verbrennungs- oder Ladeluftmenge regelmäßig über ein Drosselelement, insbesondere eine sogenannte Drosselklappe, in Abhängigkeit der Lastanforderungen gesteuert oder geregelt. Im Fall der Drosselklappe ist diese zur Beeinflussung eines Hauptluftstroms zum Verbrennungsmotor in einem Hauptluftkanal angeordnet und dabei üblicherweise ähnlich wie eine Drehtür an einer drehbar gelagerten Klappenwelle befestigt. Letztere ist üblicherweise mittels eines Antriebs verstellbar. Bei modernen Verbrennungsmotoren wird die Drosselklappe meist mittels eines elektromotorischen Antriebs verstellt. Bei herkömmlichen Verbrennungsmotoren erfolgt die Verstellung der Drosselklappe üblicherweise mittels eines Seilzugs.

Um die für einen Leerlaufbetrieb erforderliche Luftmenge auch bei "geschlossener" Drosselklappe bereitstellen zu können, sind Konzepte bekannt, die ein vollständiges, dichtes Schließen der Drosselklappe verhindern, bspw. mittels eines Anschlags, oder die einen Umgehungskanal aufweisen, durch den die "Leerlaufluft" strömen kann.

Drosselklappen sind aber auch bei anderen Antriebskonzepten nutzbar, so z. B. bei Brennstoffzellen. Hier kommt als Energieträgerfluid zwar keine (Umgebungs-) Luft zum Einsatz. Jedoch wird die Energiewandlung in diesem Fall unter anderem über die Regulierung der der Brennstoffzelle zugeführten Menge eines Energieträgers - insbesondere also dem Energieträgerfluid, bspw. Wasserstoff, Methanol, Butan oder Erdgas - gesteuert oder geregelt.

Der Erfindung liegt die Aufgabe zugrunde, die Funktion einer Drosselklappe zu verbessern.

Diese Aufgabe wird erfindungsgemäße gelöst durch eine Drosselklappenanordnung mit den Merkmalen des Anspruchs 1. Vorteilhafte und teils für sich erfindungsgemäße Ausführungsformen und Weiterentwicklungen der Erfindung sind in den Unteransprüchen und der nachfolgenden Beschreibung dargelegt.

Die erfindungsgemäße Drosselkappenanordnung ist vorzugsweise zum Einsatz mit einer Brennstoffzelle eingerichtet und vorgesehen. Optional kann die Drosselklappenanordnung aber auch bei einer Verbrennungskraftmaschine zum Einsatz kommen.

Die erfindungsgemäße Drosselklappenanordnung weist einen Gehäusekörper sowie einen Hauptkanal auf, der zur Leitung eines Fluidstroms eines Energieträgerfluids den Gehäusekörper durchläuft. Die Drosselklappenanordnung weist ferner eine in dem Hauptkanal verstellbar angeordnete Drosselklappe zur Steuerung oder Regelung des Fluidstroms des Energieträgerfluids im Hauptkanal auf. Außerdem weist die Drosselklappenanordnung eine Klappenwelle auf, mit der die Drosselklappe drehfest verbunden ist und die zumindest im bestimmungsgemäßen Einsatzzustand zur Verstellung der Drosselklappe mit einem Antrieb gekoppelt ist. Des Weiteren weist die Drosselklappenanordnung einen Dichtungskörper auf, mittels dessen die Drosselklappe den Hauptkanal in einer Schließstellung dichtend gegen den Durchtritt des Energieträgerfluids verschließt.

Die Drosselklappe weist somit auch die Funktion eines Absperrventils auf und wird deshalb auch als "shut off valve" bezeichnet.

Unter "dichtend" wird hier und im Folgenden insbesondere verstanden, dass bevorzugt kein Reststrom oder lediglich ein für einen bestimmungsgemäßen Betrieb der der Drosselklappenanordnung nachgeordneten Einheit (insbesondere also der Brennstoffzelle, optional dem Verbrennungsmotor) nicht ausreichender Reststrom als Leckage an der Drosselklappe vorbei durch den Hauptkanal erfolgen kann. Insbesondere für den Fall, dass die Drosselklappenanordnung mit der Brennstoffzelle zum Einsatz kommt, wird "dichtend" vorzugsweise derart verstanden, dass keine Leckage des Energieträgerfluids an der Drosselklappe vorbei erfolgen kann.

Der auf die Klappenwelle wirkende Antrieb ist bevorzugt ebenfalls Teil der Drosselklappenanordnung und in diesem Fall insbesondere durch einen Elektromotor mit einem nachgeschalteten (aber der Klappenwelle vorgeschalteten) Getriebe gebildet.

Durch die Dichtung des Hauptkanals bei in Schließstellung angeordneter Drosselklappe wird ein Verbrauch eines Energieträgers - bspw. dem Energieträgerfluids selbst oder einem sonstigen Brenn- oder Treibstoff - vorteilhaft verringert. Im Fall von Verbrennungskraftmaschinen könnte eine Leckage von Luft - die im Verständnis der vorliegenden Anmeldung als Reaktionspartner für die Verbrennung Sauerstoff enthält und aus diesem Grund ebenfalls als Energieträgerfluid angesehen wird - zu einer weiterlaufenden, unerwünschten Verbrennung oder einer Teilfüllung von Zylindern führen, die für eine spätere Verbrennung nachteilig sein könnte. Im Fall der Brennstoffzelle würde eine Leckage des Energieträgerfluids - bspw. Wasserstoff, Methanol, Erdgas oder dergleichen - zu einer weiter andauernden Energiewandlung führen, die im aktuellen Betriebs- (oder auch Nichtbetriebs-) Zustand unerwünscht sein kann.

Das Gehäuse weist vorzugsweise einen Rohrabschnitt auf, in dem der Hauptkanal geführt ist. Dieser Rohrabschnitt bildet insbesondere eine den Hauptkanal umgrenzende Kanalwand.

In einer zweckmäßigen Ausführung ist (innerhalb der Drosselklappenanordnung) an der den Hauptkanal umgrenzenden Kanalwand ein Absatz ausgeformt, der zumindest bereichsweise die lichte Weite (im Fall eines rotationssymmetrischen Kanals also dessen Durchmesser) des Hauptkanals verringert (verjüngt). Anders ausgedrückt verjüngt sich der den Hauptkanal umgrenzende Rohrabschnitt - vorzugsweise stufen- oder sprungartig. Dabei wird eine "Drosselöffnung", also die lichte "Restweite" des Hauptkanals ausgebildet. Die Drosselklappe liegt dabei in deren Schließstellung an einer an dem Absatz ausgebildeten Schließfläche an - bspw. vergleichbar zu einem Türblatt, das am Türfalz in der Türzarge anliegt. Vorzugsweise sind dabei der Absatz und auch die Schließfläche ringförmig geschlossen um den Hauptkanal (konkret um die Drosselöffnung) umlaufend ausgebildet. Außerdem ist die Schließfläche vorzugsweise radial zur (Haupt-) Strömungsrichtung (oder auch Kanalhauptachse) des Hauptkanals erstreckt oder anders ausgedrückt steht eine Flächennormale der Schließfläche parallel zu dieser (Haupt-) Strömungsrichtung. Damit kann die Drosselklappe vollumfänglich, und insbesondere von nur einer Seite her (mit anderen Worten aus einer Richtung), an der Schließfläche anliegen, was die Dichtwirkung verbessert.

Unter "Haupt-Strömungsrichtung" ist hier und im Folgenden insbesondere die durch die Achse oder den Verlauf des Hauptkanals vorgegebene generelle Strömungsrichtung im Hauptkanal zu verstehen, die insbesondere unabhängig von lediglich lokalen Störungen, wie sie bspw. durch den vorstehend beschriebenen Absatz hervorgerufen werden können, ist.

In einer bevorzugten Ausführung ist die Drosselklappe an einer randseitigen Kante (der Drosselklappe selbst) mit der Klappenwelle verbunden, steht also insbesondere nur auf einer Seite radial von der Klappenwelle ab. Das heißt insbesondere, dass die Klappenwelle zumindest abschnittsweise entlang (vorzugsweise parallel zu) dieser randseitigen Kante verläuft und diese Kante vorzugsweise auch nicht schneidet. Zweckmäßigerweise ist diese randseitige Kante dabei auch geradlinig ausgeführt. Dadurch bewegt sich die Drosselklappe auch vergleichbar zu einem Türblatt und kann so mit nur einer (Flach-) Seite an die Schließfläche anschlagen, was ebenfalls zur Verbesserung der Dichtwirkung beiträgt - im Gegensatz zu klassischen Drosselklappen, die mittig an der Klappenwelle angelenkt sind, somit drehtürartig bewegt werden und deshalb von zwei unterschiedlichen Seiten in der Schließstellung an einer Schließkante anliegen müssten.

Optional erstreckt sich die Klappenwelle dabei durch den Hauptkanal und ist an gegenüberliegenden Stellen an der Kanalwand gelagert. In diesem Fall ist die Drosselklappe, insbesondere mit ihrer randseitigen Kante, bspw. in einen Schlitz der Klappenwelle eingesteckt oder an einer abgeflachten (bspw. plan gefrästen) Aufnahmefläche der Klappenwelle angeschlagen. Alternativ kann die Klappenwelle aber auch nur zu einem Teil in den Hauptkanal vorstehen. In diesem Fall ist die Drosselklappe mit ihrem zugeordneten Rand- oder "Eck"-Bereich an die Klappenwelle angebunden. Die Drosselklappe ist vorzugsweise mit der Klappenwelle verschraubt und somit zumindest prinzipiell auf einfache Weise austauschbar. Alternativ ist die Drosselklappe mit der Klappenwelle verschweißt.

Insbesondere ist in Ausführung der randseitigen Anbindung der Drosselklappe an die Klappenwelle diese (oder zumindest deren Rotationsachse) also außermittig zum Hauptkanal, insbesondere randseitig zu diesem angeordnet. Vorzugsweise verläuft dabei die Klappenwelle (bzw. deren Rotationsachse) neben oder außerhalb der Drosselöffnung.

Grundsätzlich ist es im Rahmen der Erfindung denkbar, dass der Hauptkanal einen polygonalen, insbesondere viereckigen, rechtwinkligen Querschnitt aufweist und entsprechend auch die Drosselklappe rechtwinklig gestaltet ist.

In einer bevorzugten Ausführung weist der Hauptkanal (insbesondere zumindest im Bereich der vorstehend beschriebenen Verjüngung - vorzugsweise also die Drosselöffnung) aber einen kreissegmentartigen Querschnitt oder eine Kombination einer viereckigen, insbesondere rechteckigen Form mit einem Kreissegment auf (bspw. ein Rechteck, an dessen Längsseite ein Kreisabschnitt mit seiner Sekante angesetzt ist). In letzterem Fall ist der Querschnitt also zumindest abschnittsweise kreissegmentartig. Bevorzugt ist die Drosselklappe der Querschnittsform des Hauptkanals bei dessen Durchtrittt durch die vorstehend beschriebene Verjüngung (insbesondere also an die Form der Drosselöffnung) angeglichen, weist vorzugsweise die gleiche Form auf, mit entsprechend vergrößerten Abmessungen, so dass eine umlaufend geschlossene Abdeckung des Hauptkanals an dieser Stelle ermöglicht ist. Im Fall eines "echten" Kreissegments, ist der Kreisbogen vorzugsweise größer als ein Halbkreis. D. h. der Kreismittelpunkt liegt innerhalb der Fläche des Kreissegments. Die Drosselklappe bildet in diesem Fall ebenfalls ein - entsprechendes - Kreissegment. Die Sekante des Kreissegments der Drosselklappe bildet dabei die vorstehend beschriebene randseitige Kante, mit der die Drosselklappe an der Klappenwelle angelenkt ist.

In einer zweckmäßigen Ausführung ist der Dichtungskörper an die Drosselklappe angeformt. Vorzugsweise der Dichtungskörper dabei spritzgießtechnisch an die Drosselklappe angeformt, d. h. "angespritzt". Dies stellt eine einfache und dennoch haltbare - insbesondere in Bezug auf die Positionierung des Dichtungskörpers - Vorgehensweise dar.

In einer alternativen Ausführung ist der Dichtungskörper separat ausgebildet und bspw. auf die Schließfläche aufgelegt, an diese oder an die Drosselklappe angeklemmt oder aufgeklebt.

In einer bevorzugten und besonders zweckmäßigen Ausführung umläuft der Dichtungskörper zumindest in der Schließstellung der Drosselklappe den Hauptkanal ringförmig geschlossen.

In einer zweckmäßigen Ausführung ist der Dichtungskörper aus einem Elastomer, insbesondere aus einem gegen das Energieträgerfluid beständigen Elastomer, bspw. aus einem Kautschuk, einem Silikonkautschuk, einem Nitril-Kautschuk oder dergleichen ausgebildet.

Weiter bevorzugt liegt die Drosselklappe in deren Schließstellung unter Zwischenlage des Dichtungskörpers ringförmig geschlossen an der Schließfläche des Absatzes an. Dadurch wird eine besonders dichte Anordnung der Drosselklappe im Hauptkanal erreicht.

In einer weiteren zweckmäßigen Ausführung ist die Drosselklappe ferner derart im Hauptkanal angeordnet, dass diese entgegen einer bestimmungsgemäßen Strömungsrichtung des Energieträgerfluids aus der Schließstellung öffnet. Anders ausdrückt wirkt eine vom Energieträgerfluid auf die Drosselklappe ausgeübte Kraft in deren Schließrichtung, drückt die Drosselklappe also vorteilhafterweise gegen die Schließfläche und erhöht somit die Klemmwirkung auf den Dichtungskörper. Dies erhöht vorteilhafterweise die Dichtwirkung weiter.

Um zu vermeiden, dass die Klappenwelle zu einer Undichtigkeit führt oder zumindest um einen negativen Einfluss auf die Dichtwirkung zur verringern, ist die Klappenwelle in einer besonders zweckmäßigen Ausführung außerhalb der Schließfläche des Absatzes angeordnet.

In einer weiteren zweckmäßigen Ausführung ist die Klappenwelle im Gehäusekörper mittels gedichteter Lager gelagert. Dadurch wird Leckage des Energieträgerfluids entlang der Klappenwelle vermieden oder zumindest auf ein vernachlässigbares Maß verringert.

In einer wiederum weiteren zweckmäßigen Ausführung ist die Klappenwelle und/oder die Drosselklappe in Schließrichtung federbelastet. Dadurch wird ein Schließen der Drosselklappe auch bei fehlerhafter Ansteuerung des Antriebs ermöglicht sowie auch das Schließen im Normalbetrieb unterstützt.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer schematischen Draufsicht eine Drosselklappenanordnung mit einem mittels einer Drosselklappe verschlossenen Hauptkanal,
- Fig. 2: in Ansicht gemäß Fig. 1 die Drosselklappenanordnung ohne Drosselklappe,
- Fig. 3: in einer schematischen Schnittansicht III-III gemäß Fig. 1 ausschnitthaft den Hauptkanal sowie die Drosselkappe in deren Schließstellung, und
- Fig. 4: in einer schematischen Explosionsdarstellung die Drosselklappenanordnung.

Einander entsprechende Teile sind in allen Figuren stets mit gleichen Bezugszeichen versehen.

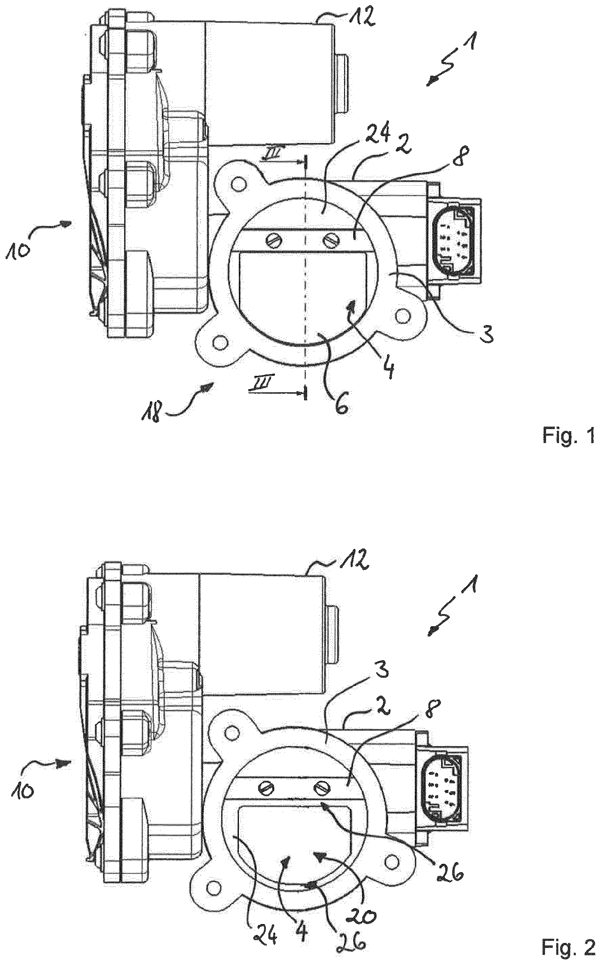

In Fig. 1 ist schematisch eine Drosselklappenanordnung, im Folgenden kurz als Shut-Off-Ventil 1 bezeichnet, dargestellt. Das Shut-Off-Ventil 1 weist einen Gehäusekörper 2 auf, der unter anderem mit einem rohrförmigen Abschnitt 3 einen Hauptkanal 4 einschließt. Der Hauptkanal 4 dient zur Leitung (oder Führung) eines Fluidstroms eines Energieträgerfluids. Das Shut-Off-Ventil 1 dient im vorliegenden Ausführungsbeispiel zum Einsatz mit einer Brennstoffzelle. Bei dem Energieträgerfluid handelt es sich somit im vorliegenden Ausführungsbeispiel um ein Gas, bspw. Wasserstoff oder dergleichen.

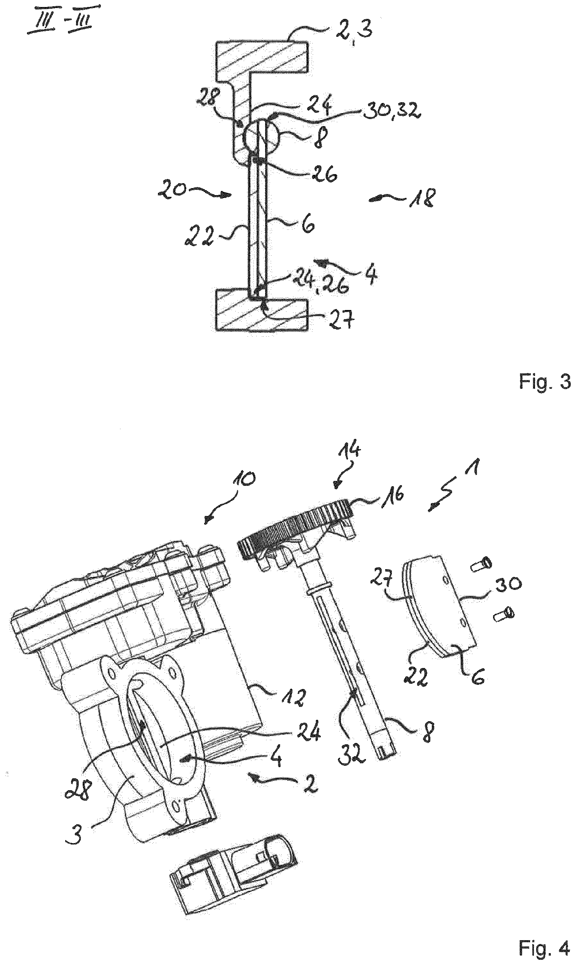

Das Shut-Off-Ventil 1 weist ferner eine im Hauptkanal 4 reversibel verstellbar angeordnete Drosselkappe 6 auf, die zur Steuerung oder Regelung des Fluidstroms im Hauptkanal 4 eingerichtet und vorgesehen ist. Die Drosselklappe 6 ist starr mit einer rotierbar gelagerten Klappenwelle 8 verbunden. Zur Verstellung der Klappenwelle 8 und damit der Drosselklappe 6 weist das Shut-Off-Ventil 1 einen (Verstell-) Antrieb 10 in Form eines Elektromotors 12 mit einem nachgelagerten Getriebe 14 (s. angedeutet in Fig. 4 anhand eines mit der Klappenwelle 8 drehfest verbundenen Stirnrads 16) auf.

In Fig. 1 und 3 ist die Drosselklappe 6 in einer Schließstellung 18 dargestellt. Dabei verschließt die Drosselklappe 6 den Hauptkanal 4, konkret eine im "Drosselbereich", also an der Stelle, an der die Drosselklappe 6 angelenkt ist, angeordnete und durch eine Verjüngung des Hauptkanals 4 gebildete Drosselöffnung 20 (s. Fig. 2). Um die Drosselöffnung 20 möglichst dicht zu verschließen, weist das Shut-Off-Ventil 1 einen Dichtungskörper 22 auf. Dieser ist spritzgießtechnisch an die Drosselklappe 6 angeformt.

Die Drosselöffnung 20 ist durch einen ringförmig geschlossenen Absatz 24 im rohrförmigen Abschnitt 3 gebildet, der radial in den Hauptkanal 4 vorsteht und dessen lichte Weite reduziert. Dieser Absatz 24 bildet eine Schließfläche 26 aus, welche die Drosselöffnung 20 ringförmig geschlossen umläuft, wobei insbesondere die Flächennormale der Schließfläche 26 in Hauptströmungsrichtung des Hauptkanals 4 ausgerichtet ist, und an der die Drosselklappe 6, konkret der Dichtungskörper 22 in der Schließstellung ringförmig geschlossen von einer Seite her anliegt. "Von einer Seite her" ist hier insbesondere derart zu verstehen, dass die Drosselklappe 6 nicht von mehreren Richtungen, sondern aus einer Richtung (die hier vorzugsweise durch die Hauptströmungsrichtung vorgegeben ist) an der Schließfläche 26 anliegt. Der Dichtungskörper 22 ist hierzu als Ring entlang den Kanten der Drosselklappe 6 umlaufend ausgebildet. Optional ist es auch möglich, den Dichtungskörper 22 flächig über die gesamte Drosselkappe 6 auszubilden.

Die Drosselöffnung 20 weist als Form ein Rechteck mit einer kreisabschnittsförmig nach außen gewölbten Längskante 27 auf. Dabei ist diese Längskante 27 an den Radius des - grundsätzlich kreisförmigen - Querschnitts des Hauptkanals 4 angeglichen. Die Drosselklappe 6 ist in ihrer Form der Drosselöffnung 20 nachgebildet und weist der Drosselöffnung 20 gegenüber vergrößerte Abmessungen auf, so dass die Drosselklappe 6 die Drosselöffnung 20 in der Schließstellung 18 vollständig abdecken kann.

Die Klappenwelle 8 ist außermittig zum Hauptkanal 4, d. h. außerhalb dessen Zentrums, und konkret neben der Drosselöffnung 20 angeordnet. Konkret liegt die Klappenwelle 8 in einer Mulde 28 im Absatz 24 ein, und zwar derart, dass bei an der Klappenwelle 8 gehalterter Drosselklappe 6 diese flächig auf dem Absatz 24, konkret auf der Schließfläche 26 aufliegt. Die Drosselklappe 6 ist dazu mit einer der gebogenen Längskante 27 gegenüberliegenden Längskante 30 in einem Längsschlitz 32 in der Klappenwelle 8 aufgenommen und drehfest befestigt (hier beispielhaft mittels einer Verschraubung). Alternativ zu dem Längsschlitz 32 kann die Klappenwelle 8 auch einseitig plan gefräst sein, so dass die Drosselklappe 6 auf die dadurch gebildete Aufnahme- oder Auflagefläche aufgelegt und befestigt werden kann.

Die Klappenwelle 8 und damit auch die Drosselklappe 6 ist dabei auf einer Zuströmseite der Drosselklappenanordnung 1 angeordnet. Dadurch wirkt das Energieträgerfluid schließend auf die Drosselklappe 6, so dass - gegebenenfalls auch bei ausgefallenem Antrieb 10 - die Drosselklappe 6 von dem Energieträgerfluid in der Schließstellung gehalten (sowie an die Schließfläche 26 angedrückt) und somit die Dichtwirkung der Drosselklappe 6 und des Dichtungskörpers 22 unterstützt wird.

Optional ist die Klappenwelle 8 in nicht dargestellter Weise in Schließrichtung federbelastet.

Aufgrund der vorstehend beschriebenen Anordnung der Drosselklappe 6, der Klappenwelle 8 sowie des Dichtungskörpers 22 ergibt sich eine besonders hohe Dichtwirkung für das Shut-Off-Ventil 1.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Shut-Off-Ventil
- 2: Gehäusekörper
- 3: Abschnitt
- 4: Hauptkanal
- 6: Drosselklappe
- 8: Klappenwelle
- 10: Antrieb
- 12: Elektromotor
- 14: Getriebe
- 16: Stirnrad
- 18: Schließstellung
- 20: Drosselöffnung
- 22: Dichtungskörper
- 24: Absatz
- 26: Schließfläche
- 27: Längskante
- 28: Mulde
- 30: Längskante
- 32: Schlitz

## Patentansprüche

1. Drosselkappenanordnung (1), insbesondere für eine Brennstoffzelle, aufweisend
- einen Gehäusekörper (2),
- einen Hauptkanal (4), der zur Leitung eines Fluidstroms eines Energieträgerfluids den Gehäusekörper (2) durchläuft,
- eine in dem Hauptkanal (4) verstellbar angeordnete Drosselklappe (6) zur Steuerung oder Regelung des Fluidstroms im Hauptkanal (4),
- eine Klappenwelle (8), mit der die Drosselklappe (6) drehfest verbunden ist und die zumindest im bestimmungsgemäßen Einsatzzustand zur Verstellung der Drosselklappe (6) mit einem Antrieb (10) gekoppelt ist, und
- einen Dichtungskörper (22), mittels dessen die Drosselklappe (6) den Hauptkanal (4) in einer Schließstellung (18) dichtend gegen den Durchtritt des Energieträgerfluids verschließt.

2. Drosselkappenanordnung (1) nach Anspruch 1,
wobei an einer den Hauptkanal (4) umgrenzenden Kanalwand ein Absatz (24) ausgeformt ist, der zumindest bereichsweise die lichte Weite des Hauptkanals (4) verringert, wobei die Drosselklappe (6) in der Schließstellung (18), vorzugsweise von nur einer Seite her, an einer an dem Absatz (24) ausgebildeten Schließfläche (26) anliegt, insbesondere wobei der Absatz (24) und die Schließfläche (26) ringförmig geschlossen um den Hauptkanal (4) umlaufend ausgebildet sind.

3. Drosselkappenanordnung (1) nach Anspruch 1 oder 2,
wobei die Drosselklappe (6) an einer randseitigen Kante (30) mit der Klappenwelle (8) verbunden ist.

4. Drosselkappenanordnung (1) nach Anspruch 3,
wobei der Hauptkanal (4) zumindest abschnittsweise einen kreissegmentartigen Querschnitt aufweist, insbesondere wobei die Drosselklappe (6) in deren Form diesem Querschnitt angeglichen ist.

5. Drosselkappenanordnung (1) nach einem der Ansprüche 1 bis 4, wobei der Dichtungskörper (22) an die Drosselklappe (6) angeformt ist.

6. Drosselkappenanordnung (1) nach einem der Ansprüche 1 bis 5, wobei der Dichtungskörper (22) zumindest in der Schließstellung der Drosselklappe (6) den Hauptkanal (4) ringförmig geschlossen umläuft.

7. Drosselkappenanordnung (1) nach einem der Ansprüche 2 bis 6, wobei die Drosselklappe (6) in deren Schließstellung unter Zwischenlage des Dichtungskörpers (22) ringförmig geschlossen an der Schließfläche (26) des Absatzes (24) anliegt, insbesondere wobei die Klappenwelle (8) außerhalb der Schließfläche (26) des Absatzes (24) angeordnet ist.

8. Drosselkappenanordnung (1) nach einem der Ansprüche 1 bis 7, wobei die Klappenwelle (8) im Gehäusekörper (2) mittels gedichteter Lager gelagert ist.

9. Drosselkappenanordnung (1) nach einem der Ansprüche 1 bis 8, wobei die Drosselklappe (6) derart im Hauptkanal (4) angeordnet ist, dass diese entgegen einer bestimmungsgemäßen Strömungsrichtung des Energieträgerfluids aus der Schließstellung (18) öffnet.

10. Drosselkappenanordnung (1) nach einem der Ansprüche 1 bis 9, wobei die Drosselklappe (6) oder die Klappenwelle (8) in Schließrichtung federbelastet ist.
